# EUROPEAN PATENT APPLICATION

(11) **EP 4 438 189 A1**
(43) Date of publication of application: **02.10.2024**
(21) Application number: 23844054.9
(22) Date of filing: 18.04.2023
(51) Int. Cl.: B05C 11/10, B05C 7/00

(54) **GLUE RECEIVING MECHANISM AND GLUING DEVICE**

(30) Priority: 08.02.2023 CN 202320148887 U
(71) Applicant: Contemporary Amperex Technology (Hong Kong) Limited, Central, Central And Western District (HK)
(72) Inventor: SUN, Yanlin, Ningde, Fujian 352100 (CN); XIA, Yijun, Ningde, Fujian 352100 (CN); LUO, Yonghua, Ningde, Fujian 352100 (CN); GONG, Xueqing, Ningde, Fujian 352100 (CN)
(74) Representative: Gong, Jinping
(86) International application number: PCT/CN2023/088990
(87) International publication number: WO 2024/164431

(57) **Abstract**

The present application relates to a glue receiving mechanism and a glue coating device. A glue receiving member (12) is driven by a driving assembly (13) to reciprocate between a glue receiving position and an avoidance position. When a member to be coated with the glue needs to be coated with the glue by the glue coating device (100), the glue receiving member (12) is driven by the driving assembly (13) to move to the avoidance position. At this time, the glue receiving member (12) will not affect the process of coating the glue onto the member to be coated with the glue by a glue nozzle (30), so that the glue can be coated successfully. When the glue coating is completed, the driving assembly (13) drives the glue receiving member (12) to move from the avoidance position to the glue receiving position, and at this time, the glue receiving member (12) can receive the residual glue from the glue nozzle (30) and prevent the glue from sticking to the member to be coated with the glue, so that the structure of the member to be coated with the glue is cleaner.

## Description

### Cross Reference

The present application is referenced to the Chinese patent application No. 202320148887.3, which is filed on February 8, 2023 and entitled "GLUE RECEIVING MECHANISM AND GLUE COATING DEVICE", the entirety of which is incorporated by reference herein.

### Technical Field

The present application relates to the technical field of battery production devices, and in particular to a glue receiving mechanism and a glue coating device.

### Background

In a battery production process, in order to improve the structural strength and thermal conductivity of a battery cell or a battery module and a box body, it is usually necessary to coat glue on an inner wall of the box body to realize the connection between the battery cell or the battery module and the box body. However, due to the viscosity of the glue itself, when the glue coating is completed and a glue nozzle is separated from the box body, the residual glue from the glue nozzle is easy to draw between the box body and the glue nozzle, causing the glue to stick to other positions on the box that do not need to be glued, or stick to other structures of a battery, resulting in contamination of the box body.

### Summary of the Invention

Based on this, it is necessary to provide a glue receiving mechanism and a glue coating device for the problem that the glue is easy to pollute the box body during a current glue coating process.

In a first aspect, the present application provides a glue receiving mechanism for use in a glue coating device. The glue coating device includes a glue nozzle for coating glue, and the glue receiving mechanism includes:
a fixing member;
a glue receiving member spaced from the fixing member; and
a driving assembly connected between the fixing member and the glue receiving member;
wherein the glue receiving member has a glue receiving position for receiving the glue from the glue nozzle and an avoidance position for avoiding the glue nozzle and a member to be coated with the glue, and the driving assembly is used for driving the glue receiving member to reciprocate between the glue receiving position and the avoidance position.

In a technical solution of an embodiment of the present application, the glue receiving member is driven by the driving assembly to reciprocate between the glue receiving position and the avoidance position, so that the glue receiving member does not affect the glue coating process when the glue is coated, and can receive the glue dripped from the glue nozzle when the glue coating is completed and prevents the glue from sticking to a region that does not need to be coated with the glue on the member to be coated with the glue, thereby improving the situation where the glue pollutes the member to be coated with the glue.

In some embodiments, the glue receiving member further has an accommodating position between the glue receiving position and the avoidance position, the driving assembly includes a first driving member and a second driving member, the glue receiving mechanism further includes a connecting member, and the first driving member is disposed on the connecting member and in driving connection with the glue receiving member, so as to drive the glue receiving member to reciprocate between the glue receiving position and the accommodating position; and
the second driving member is disposed on the fixing member and in driving connection with the connecting member, so as to drive the connecting member to reciprocate between the avoidance position and the accommodating position;
wherein a driving direction of the first driving member intersects a driving direction of the second driving member.

In a technical solution of an embodiment of the present application, the glue receiving member is driven by the first driving member and the second driving member respectively to reciprocate between the glue receiving position and the accommodating position and between the accommodating position and the avoidance position, so that the glue receiving member can move in stages between the glue receiving position and the avoidance position to realize the movement of the glue receiving member in different directions.

In some embodiments, the glue receiving member includes a first sub-member, a second sub-member stacked on the first sub-member, and a glue receiving film, the first sub-member is connected to the driving assembly, the second sub-member is provided with a glue receiving opening thereon, and the glue receiving film is sandwiched between the first sub-member and the second sub-member, and is communicated with the glue receiving opening to form a glue receiving bin.

In a technical solution of an embodiment of the present application, through the aforementioned structure, an inner wall of the glue receiving opening and the glue receiving film can be enclosed together to form the glue receiving bin, so that the receiving effect of the glue receiving member on the glue is better. Furthermore, the glue received by the glue receiving member actually falls on the glue receiving film. By replacing the glue receiving film, quick cleaning of the glue receiving member can be achieved, thereby improving the glue receiving efficiency.

In some embodiments, the glue receiving member further includes a first locking member and a second locking member respectively disposed on the first sub-member and the second sub-member, and the first locking member and the second locking member cooperate with each other, so that the glue receiving film is detachably sandwiched between the first sub-member and the second sub-member.

In a technical solution of an embodiment of the present application, when the glue receiving film needs to be replaced, it is only necessary to separate the first locking member from the second locking member and remove the second sub-member from the first sub-member to quickly replace the glue receiving film. Therefore, the glue receiving efficiency can be improved.

In some embodiments, the first locking member is configured as one of a hook and a buckle, and the second locking member is configured as the other one of the hook and the buckle.

In a technical solution of an embodiment of the present application, by setting the hook and the buckle that cooperate with each other, the quick disassembly and assembly of the first sub-member and the second sub-member can be realized, so as to facilitate the rapid replacement of the glue receiving film between the first sub-member and the second sub-member.

In some embodiments, the fixing member includes a first fixing plate, a second fixing plate and a connecting rod, the first fixing plate and the second fixing plate are spaced along the driving direction of the second driving member, and the connecting rod is connected between the first fixing plate and the second fixing plate;
two opposite ends of the second driving member in its driving direction are respectively disposed on the first fixing plate and the second fixing plate.

In a technical solution of an embodiment of the present application, the first fixing plate, the second fixing plate and the connecting rod are enclosed together to form a frame structure. The two opposite ends of the second driving member in its driving direction are respectively disposed on the first fixing plate and the second fixing plate, so that the second driving member can be stably disposed in the aforementioned frame structure, so as to improve the mounting stability of the second driving member.

In a second aspect, the present application provides a glue coating device, including:
a main body having a glue storage cavity;
a glue nozzle for coating glue to a member to be coated with the glue;
a glue pipe disposed on the main body and communicated between the glue storage cavity and the glue nozzle; and
a glue receiving mechanism as described above, of which a fixing member is fixed on the main body.

In a technical solution of an embodiment of the present application, when the glue receiving mechanism is fixed onto the main body, the driving assembly drives the glue receiving member to move from the avoidance position to the glue receiving position, then the glue receiving member is located between the glue nozzle and the member to be coated with the glue and the glue receiving member is located directly below the glue nozzle, so as to receive the residual glue from the glue nozzle.

In some embodiments, the glue coating device further includes a positioning assembly disposed on the main body, the positioning assembly includes an end face capable of abutting against an end of the glue nozzle facing away from the glue pipe, and the end face is used for positioning a location of the glue nozzle on the glue pipe.

In a technical solution of an embodiment of the present application, by setting the positioning assembly, when the glue nozzle is mounted, the end of the glue nozzle facing away from the glue pipe can abut against the end face of the positioning assembly, thereby positioning the position of the glue nozzle on the glue pipe.

In some embodiments, the positioning assembly includes a first positioning member and a second positioning member, the first positioning member is connected between the main body and the second positioning member, and disposed as extending along a direction from the glue pipe towards the glue nozzle, and the end face is located on the second positioning member.

In a technical solution of an embodiment of the present application, the first positioning member is connected between the main body and the second positioning member, so that the second positioning member can be located at a position corresponding to the glue nozzle, so as to facilitate the glue nozzle and the end face on the second positioning member to abut against each other, thereby realizing the positioning of the glue nozzle.

In some embodiments, the end face includes a first positioning face and a second positioning face which are disposed in an intersecting way, and the end of the glue nozzle facing away from the glue pipe abuts against the first positioning face along an extending direction of the glue pipe, and the end of the glue nozzle facing away from the glue pipe abuts against the second positioning face along a direction perpendicular to the extending direction of the glue pipe.

In a technical solution of an embodiment of the present application, through the aforementioned structure, the first positioning face can position a mounting height of the glue nozzle, and the second positioning face can position a mounting direction of the glue nozzle, so that the mounting location of the glue nozzle on the glue pipe can be more precise.

For the aforementioned glue receiving mechanism and glue coating device, the glue receiving member is driven by the driving assembly to reciprocate between the glue receiving position and the avoidance position. When a member to be coated with the glue needs to be coated with the glue by the glue coating device, the glue receiving member is driven by the driving assembly to move to the avoidance position. At this time, the glue receiving member will not affect the process of coating the glue onto the member to be coated with the glue by the glue nozzle, so that the glue can be coated successfully. When the glue coating is completed, the driving assembly drives the glue receiving member to move from the avoidance position to the glue receiving position, and at this time, the glue receiving member can receive the residual glue from the glue nozzle and prevent the glue from sticking to the member to be coated with the glue, so that the structure of the member to be coated with the glue is cleaner.

The above description is only a summary of the technical solutions of the present application, and in order to understand more clearly the technical means of the present application for implementing in accordance with the contents of the specification, and in order to make the above and other objectives, features and advantages of the present application more apparent and readily understandable, detailed description of the present application are hereby set forth below.

### Description of Drawings

Various other advantages and benefits will become apparent to those of ordinary skills in the art upon reading the following detailed description of embodiments. The drawings are for the purpose of illustrating the embodiments only and are not to be considered as a limitation to the present application. Also, the same components are denoted by the same reference numerals throughout the drawings. In the accompanying drawings:
FIG. 1 is a schematic view showing an overall structure of a glue coating device in some embodiments of the present application;
FIG. 2 is a schematic view showing an overall structure of a glue receiving mechanism in some embodiments of the present application;
FIG. 3 is a schematic view showing a planar structure of the glue receiving mechanism in some embodiments of the present application;

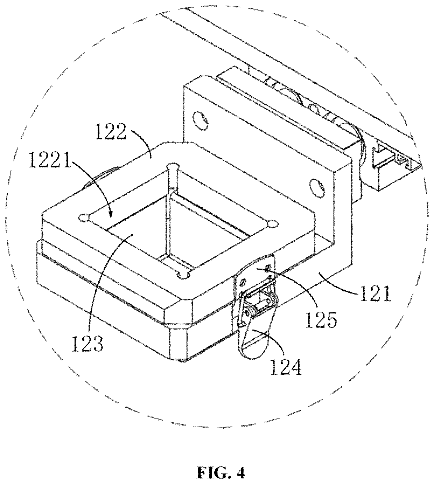

FIG. 4 is a partial enlarged view at A of FIG. 2;
FIG. 5 is a schematic view showing a planar structure of the glue coating device in some embodiments of the present application; and
FIG. 6 is a partial enlarged view at B of FIG. 5;

100. glue coating device; 10. glue receiving mechanism; 20. main body; 30. glue nozzle; 40. glue pipe; 50. positioning assembly; 11. fixing member; 12. glue receiving member; 13. driving assembly; 14. connecting member; 15. guide rod; 51. first positioning member; 52. second positioning member; 111. first fixing plate; 112. second fixing plate; 113. connecting rod; 121. first sub-member; 122. second sub-member; 123. glue receiving film; 124. first locking member; 125. second locking member; 131. first driving member; 132. second driving member; 521. first positioning face; 522. second positioning face; 1221. glue receiving opening.

### Detailed Description

The embodiments of the technical solutions of the present application will be described in detail below in conjunction with the accompanying drawings. The following embodiments are only used for illustrating the technical solutions of the present application more clearly, and therefore are only used as examples and cannot be considered as limiting the claimed scope of the present application.

Unless otherwise defined, all technical and scientific terms used herein have the same meaning as those commonly understood by those skilled in the art to which the present application belongs to; the terms used herein are intended only for the purpose of describing specific embodiments and are not intended to limit the present application; and the terms "including" and "having" and any variations thereof in the specification and the claims of the present application and in the description of drawings above are intended to cover non-exclusive inclusion.

In the description of the embodiments of the present application, the technical terms "first", "second", and the like are used only for distinguishing among different objects, and are not to be understood as indicating or implying a relative importance or implicitly specifying the number, particular order, or primary and secondary relation of the indicated technical features. In the description of the embodiments of the present application, the meaning of "multiple/a plurality of' is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application herein, the term "multiple/a plurality of" refers to two or more (including two), and similarly, "multiple/a plurality of groups" refers to two or more (including two) groups, and "multiple sheets" refers to two or more (including two) sheets.

In the description of the embodiments of the present application, the orientation or position relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or position relationships shown in the accompanying drawings and are intended to facilitate the description of the embodiments of the present application and simplify the description only, rather than indicating or implying that the referred device or element must have a particular orientation or be constructed and operated in a particular orientation, and therefore cannot be understood as limiting the embodiments of the present application.

In the description of the embodiments of the present application, unless otherwise expressly specified and defined, the technical terms "mounted", "linked", "connected", "fixed", and the like are to be understood broadly, and may, for example, be fixedly connected or detachably connected, or integrated; and may also be mechanically connected or electrically connected; and may be directly linked or indirectly linked through an intermediate medium, and may be internal communication or interaction between two elements. For those of ordinary skills in the art, the specific meanings of the above terms in the embodiments of the present application can be understood according to specific situations.

Currently, from the perspective of the development of the market situation, power batteries are more and more widely applied. The power batteries are not only applied in energy storage power source systems such as hydraulic, thermal, wind and solar power stations, but also widely applied in electric vehicles such as electric bicycles, electric motorcycles and electric cars, as well as in many fields of military equipment and aerospace. With the continuous expansion of the application field of the power batteries, the market demand is also constantly expanding.

A battery structure generally includes a box body and a battery cell. One or more battery cells are directly accommodated in the box body, or multiple battery cells form a battery module which is then accommodated in the box body. In actual production, before the battery cell or battery module is accommodated in the box body, it is necessary to coat glue to an inner wall of the box body. On one hand, the glue realizes the connection between the box body and the battery cell or battery module, which can improve the structural strength between the battery cell or battery module and the box body, and improve the stability of the overall structure of the battery. On the other hand, due to the excellent thermal conductivity of the glue itself, the thermal conductivity between the battery cell or battery module and the box body is better.

However, in the process of glue coating, due to the viscosity of the glue itself, it is easy to cause the glue to be drawn between the glue nozzle and the box body, so that it sticks to a position on the box body that does not need to be coated with the glue or other structures and thus pollutes the box body. For example, the box body is usually divided into a plurality of mutually independent units in each of which a fixed number of battery cells or battery modules are accommodated, and a beam is disposed between two adjacent ones of the units to play a role of separation.

When glue is coated, the glue nozzle is first aligned with a first unit and coat the glue onto it. After the first unit is coated with the glue, the glue nozzle is moved to be aligned with a second unit so as to coat the glue onto it. During the moving process, the glue is easy to draw and stick to the beam between the two units and thus pollute the box body.

Based on the aforementioned considerations, in order to solve the problem that the glue is easy to stick to other positions on a member to be coated with the glue that do not need to be coated with the glue due to drawing during the current glue coating process, thereby polluting the member to be coated with the glue, the applicant has conducted in-depth research and designed a glue receiving mechanism for applying in a glue coating device. A glue receiving member is driven by a driving assembly to reciprocate between a glue receiving position and an avoidance position, so that the glue receiving member does not affect the glue coating process when the glue is coated, and plays a role in receiving the glue from the glue nozzle timely when the glue coating is completed, so as to improve the situation where the glue sticks to and pollutes the member to be coated with the glue.

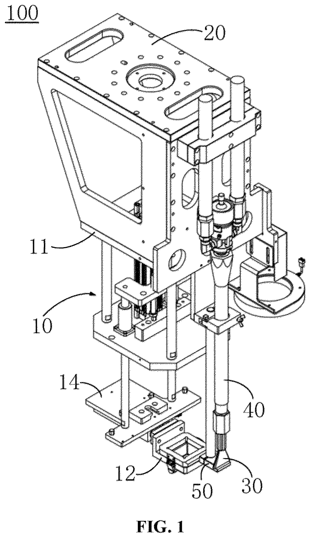

Referring to FIGs. 1, 2 and 3, an embodiment of the present application provides a glue receiving mechanism 10 for use in a glue coating device 100, wherein the glue coating device 100 includes a glue nozzle 30 for coating glue, and the glue receiving mechanism 10 includes a fixing member 11, a glue receiving member 12 and a driving assembly 13. The glue receiving member 12 is spaced from the fixing member 11, and the driving assembly 13 is connected between the fixing member 11 and the glue receiving member 12. The glue receiving member 12 has a glue receiving position for receiving the glue dripped from the glue nozzle 30 and an avoidance position for avoiding the glue nozzle 30 and a member to be coated with the glue, and the driving assembly 13 is used for driving the glue receiving member 12 to reciprocate between the glue receiving position and the avoidance position.

It should be noted that, when the glue is coated, the glue nozzle 30 is aligned with a region that needs to be coated with the glue on the member to be coated with the glue, and moves according to a target path, so that the glue can cover the region on the member to be coated with the glue that needs to be coated with the glue successfully.

When the glue coating device 100 is applied in a battery production process, the aforementioned member to be coated with the glue may be a box body. That is, the glue is coated onto an inner wall of the box body through the glue nozzle 30, so that a battery cell or battery module can be accommodated in the box body more stably.

The fixing member 11 provides a mounting basis for the glue receiving member 12 and the driving assembly 13. When the glue receiving mechanism 10 is applied in the glue coating device 100, the fixing member 11 can be fixed onto the glue coating device 100, so that the glue receiving mechanism 10 can be stably connected with the glue coating device 100. The driving assembly 13 is connected between the fixing member 11 and the glue receiving member 12 so as to drive the glue receiving member 12 to move relative to the fixing member 11, thereby driving the glue receiving member 12 to reciprocate between the glue receiving position and the avoidance position.

Further, when the glue is coated, usually the region of the member to be coated with the glue that needs to be coated with the glue is placed upwards and horizontally, so that the glue nozzle 30 can be aligned downwards with the region to be coated with the glue and coated with the glue successfully.

The glue receiving position specifically refers to a position where the glue receiving member 12 is located between the glue nozzle 30 and the member to be coated with the glue and directly below the glue nozzle 30. When the glue coating of the previous stage is completed by the glue nozzle 30, the glue receiving member 12 can receive the glue dripped from the glue nozzle 30 at the glue receiving position, so as to improve the situation where the glue is dripped to the position that does not need to be coated with the glue on the member to be coated with the glue.

Correspondingly, the avoidance position specifically refers to a position where the glue receiving member 12 is far away from a region between the glue nozzle 30 and the member to be coated with the glue, and does not affect the glue nozzle 30 from coating the glue onto the member to be coated with the glue successfully. During the process of coating the glue by the glue nozzle 30, the glue receiving member 12 is maintained at the avoidance position, so that the glue nozzle 30 can coat the glue successfully.

Specifically, when the glue nozzle 30 is coating the glue, the driving assembly 13 drives the glue receiving member 12 to move to the avoidance position, so that the glue nozzle 30 can coat the glue onto the member to be coated with the glue successfully. When the glue nozzle 30 completes the glue coating of the previous stage, the driving assembly 13 drives the glue receiving member 12 to move from the avoidance position to the glue receiving position, and the glue receiving member 12 can receive the residual glue dripped from the glue nozzle 30. At the same time, the glue nozzle 30 can move to a region needs to be coated with the glue in the next stage under the action of an external force. During this process, the glue receiving member 12 can prevent the glue from being dripped to the region that does not need to be coated with the glue on the member to be coated with the glue, thereby improving the situation where the glue pollutes the member to be coated with the glue.

The glue receiving member 12 is driven by the driving assembly 13 to reciprocate between the glue receiving position and the avoidance position, so that the glue receiving member 12 does not affect the glue coating process when the glue is coated, and can receive the glue dripped from the glue nozzle 30 when the glue coating is completed and prevents the glue from sticking to a region that does not need to be coated with the glue on the member to be coated with the glue, thereby improving the situation where the glue pollutes the member to be coated with the glue.

In some embodiments, the glue receiving member 12 further has an accommodating position between the glue receiving position and the avoidance position, the driving assembly 13 includes a first driving member 131 and a second driving member 132, the glue receiving mechanism 10 further includes a connecting member 14, and the first driving member 131 is disposed on the connecting member 14 and in driving connection with the glue receiving member 12, so as to drive the glue receiving member 12 to reciprocate between the glue receiving position and the accommodating position, the second driving member 132 is disposed on the fixing member 11 and in driving connection with the connecting member 14, so as to drive the connecting member 14 to reciprocate between the avoidance position and the accommodating position. A driving direction of the first driving member 131 intersects a driving direction of the second driving member 132.

Specifically, the first driving member 131 can be set as a first cylinder, and the second driving member 132 can be set as a second cylinder. The first cylinder and the second cylinder have simple structures and can drive the glue receiving member 12 to reciprocate on a specified path.

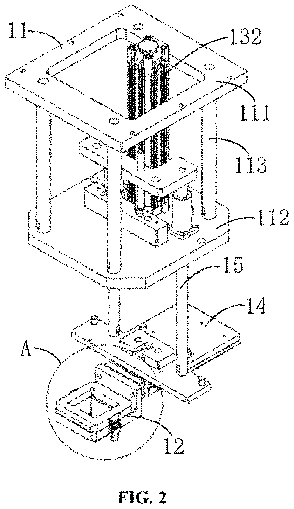

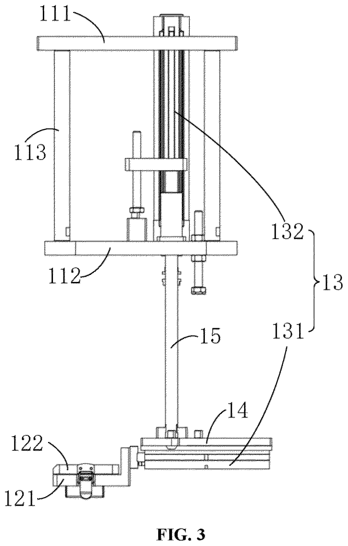

As shown in FIGs. 2 and 3, when the first driving member 131 drives the glue receiving member 12 to reciprocate between the glue receiving position and the accommodating position, specifically, a fixed end of the first cylinder is fixedly disposed on the connecting member 14, a piston rod of the first cylinder is connected with the glue receiving member 12. The first cylinder provides power to move the glue receiving member 12 relative to the fixed end along the driving direction of the first cylinder, so as to achieve the purpose of driving the glue receiving member 12 to reciprocate between the glue receiving position and the accommodating position.

When the second driving member 132 drives the connecting member 14 to reciprocate between the avoidance position and the accommodating position, specifically, a fixed end of the second cylinder is fixedly disposed on the fixing member 11, a piston rod of the second cylinder is connected with an end of the guide rod 15, and the other end of the guide rod 15 is connected with the connecting member 14. The second cylinder provides power to make the guide rod 15 telescopically move along the driving direction of the second cylinder, so as to drive the connecting member 14 to reciprocate between the avoidance position and the accommodating position.

When the glue nozzle 30 is coating the glue, the glue receiving member 12 first moves from the glue receiving position to the accommodating position, and then moves from the accommodating position to the avoidance position. In contrast, when the glue coating is completed, the glue receiving member 12 first moves from the avoidance position to the accommodating position, and then moves from the accommodating position to the glue receiving position.

It can be understood that in the process of the movement of the glue receiving member 12 from the glue receiving position to the avoidance position, two stages in different directions may be included. That is, the glue receiving member 12 first moves from the glue receiving position to the accommodating position along a horizontal direction, and then moves from the accommodating position to the avoidance position along a vertical direction or other directions intersecting with the horizontal direction, so that the glue receiving member 12 can successfully avoid the glue nozzle 30 and the member to be coated with the glue.

Therefore, the glue receiving member 12 is driven respectively by the first driving member 131 and the second driving member 132 to reciprocate between the glue receiving position and the accommodating position and between the accommodating position and the avoidance position, so that the glue receiving member 12 can move in stages between the glue receiving position and the avoidance position to realize the movement of the glue receiving member 12 in different directions.

As a specific embodiment, the first driving member 131 and the second driving member 132 can each be configured as a cylinder, and the driving of the glue receiving member 12 is realized through the cylinders.

The cylinder has a relatively simple structure, and can drive the glue receiving member 12, or drive the connecting member 14 to drive the glue receiving member 12 installed thereon to realize reciprocating movement between the avoidance position and the glue receiving position successfully, improving the moving efficiency of the glue receiving member 12.

In some embodiments, the glue receiving member 12 includes a first sub-member 121, a second sub-member 122 stacked on the first sub-member 121, and a glue receiving film 123, the first sub-member 121 is connected to the driving assembly 13, the second sub-member 122 is provided with a glue receiving opening 1221 thereon, and the glue receiving film 123 is sandwiched between the first sub-member 121 and the second sub-member 122, and communicates with the glue receiving opening 1221 to form a glue receiving bin.

Specifically, the first sub-member 121 can be set as a plate-like structure, and the first sub-member 121 is connected with the piston rod of the first cylinder. The second sub-member 122 can also be set as a plate-like structure, and the second sub-member 122 is provided with a glue receiving opening 1221 thereon. When the second sub-member 122 is disposed as being stacked on the first sub-member 121, an inner wall of the glue receiving opening 1221 can be enclosed together with the glue receiving film 123 to form a glue receiving bin for facilitating the receipt of the glue.

Further, the glue receiving film 123 can be set as a plastic thin film. The glue receiving film 123 is sandwiched between the first sub-member 121 and the second sub-member 122, and the glue receiving film 123 is communicated with the glue receiving opening 1221 to form a glue receiving bin. Therefore, when the glue receiving member 12 is receiving the glue, the glue actually falls on the glue receiving film 123. By replacing the glue receiving film 123, quick cleaning of the glue receiving member 12 can be achieved, thereby improving the glue receiving efficiency.

Through the aforementioned structure, an inner wall of the glue receiving opening 1221 and the glue receiving film 123 can be enclosed together to form the glue receiving bin, so that the receiving effect of the glue receiving member 12 on the glue is better. Furthermore, the glue received by the glue receiving member 12 actually falls on the glue receiving film 123. By replacing the glue receiving film 123, quick cleaning of the glue receiving member 12 can be achieved, thereby improving the glue receiving efficiency.

In some embodiments, the glue receiving member 12 further includes a first locking member 124 and a second locking member 125 respectively disposed on the first sub-member 121 and the second sub-member 122, and the first locking member 124 and the second locking member 125 cooperate with each other, so that the glue receiving film 123 is detachably sandwiched between the first sub-member 121 and the second sub-member 122.

Specifically, the first locking member 124 is disposed on the first sub-member 121, and the second locking member 125 is disposed on the second sub-member 122 at a position corresponding to the first locking member 124, and can be mutually matched and connected with the first locking member 124. Thus, when the second sub-member 122 is stacked on the first sub-member 121, the first locking member 124 and the second locking member 125 can be connected to each other, so that the glue receiving film 123 is detachably sandwiched between the first sub-member 121 and the second sub-member 122, so as to facilitate quick replacement of the glue receiving film 123.

When the glue receiving film 123 needs to be replaced, it is only necessary to separate the first locking member 124 from the second locking member 125 and remove the second sub-member 122 from the first sub-member 121 to quickly replace the glue receiving film 123. Therefore, the glue receiving efficiency can be improved.

In some embodiments, the first locking member 124 is configured as one of a hook and a buckle, and the second locking member 125 is configured as the other one of the hook and the buckle.

Specifically, when the first locking member 124 is configured as a hook, the second locking member 125 is configured as a buckle that cooperates with the hook. The buckle is snap-fitted on the hook so as to realize the connection therebetween. When the hook is disengaged from the hook, separation is achieved therebetween.

Moreover, the first locking member 124 can also be configured as a buckle, and correspondingly, the second locking member 125 is configured as a hook that cooperates with the buckle.

It can be understood that the first locking member 124 and the second locking member 125 can also be set as other mutually cooperating connection structures, e.g., set as mutually cooperating threaded holes and bolts, or set as mutually cooperating slots and insertion rods, which will not be repeated here anymore.

By setting the hook and the buckle that cooperate with each other, the quick disassembly and assembly of the first sub-member 121 and the second sub-member 122 can be realized, so as to facilitate the rapid replacement of the glue receiving film 123 between the first sub-member 121 and the second sub-member 122.

In some embodiments, the fixing member 11 includes a first fixing plate 111, a second fixing plate 112 and a connecting rod 113, the first fixing plate 111 and the second fixing plate 112 are spaced along the driving direction of the second driving member 132, and the connecting rod 113 is connected between the first fixing plate 111 and the second fixing plate 112. Two opposite ends of the second driving member 132 in its driving direction are respectively disposed on the first fixing plate 111 and the second fixing plate 112.

Specifically, the first fixing plate 111 and the second fixing plate 112 are spaced along the driving direction of the second driving member 132. That is, the first fixing plate 111 and the second fixing plate 112 are spaced along the vertical direction, and the connecting rod 113 is connected between the first fixing plate 111 and the second fixing plate 112.

Further, in order to improve the connection stability of the connecting rod 113 to the first fixing plate 111 and the second fixing plate 112, the connecting rods 113 can be disposed in multiples, and disposed at intervals along a circumferential direction of the first fixing plate 111 and the second fixing plate 112.

Therefore, the first fixing plate 111, the second fixing plate 112 and the connecting rod 113 are enclosed together to form a frame structure. The two opposite ends of the second driving member 132 in its driving direction are respectively disposed on the first fixing plate 111 and the second fixing plate 112. That is, the two opposite ends of the second cylinder along the vertical direction are respectively connected to the first fixing plate 111 and the second fixing plate 112, so that the second cylinder can be stably disposed in the aforementioned frame structure, so as to improve the mounting stability of the second cylinder is improved.

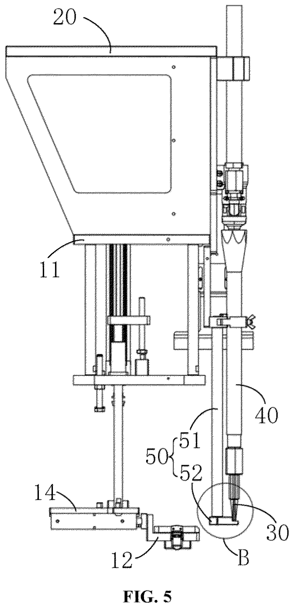

Please refer to FIGs. 1 and 5 together. Based on the same concept as the aforementioned glue receiving mechanism 10, the present application provides a glue coating device 100, which includes a main body 20, a glue nozzle 30, a glue pipe 40 and the glue receiving mechanism 10 as described above. The main body 20 has a glue storage cavity (not shown in the figure), and the glue nozzle 30 is used for coating the glue to the member to be coated with the glue. The glue pipe 40 is disposed on the main body 20 and communicated between the glue storage cavity and the glue nozzle 30, and the fixing member 11 of the glue receiving mechanism 10 is fixed on the main body 20.

The glue pipe 40 is connected between the glue storage cavity and the glue nozzle 30, so that the glue can reach the glue nozzle 30 successfully from the glue storage cavity through the glue pipe 40, and flow out from the glue nozzle 30 and coated on the member to be coated with the glue.

Further, the glue receiving mechanism 10 is fixed onto the main body 20 through the fixing member 11, so as to realize the connection between the glue receiving mechanism 10 and the main body 20.

When the glue receiving mechanism 10 is fixed onto the main body 20, the driving assembly 13 drives the glue receiving member 12 to move from the avoidance position to the glue receiving position, then the glue receiving member 12 is located between the glue nozzle 30 and the member to be coated with the glue and the glue receiving member 12 is located directly below the glue nozzle 30, so as to receive the residual glue from the glue nozzle 30.

In some embodiments, the glue coating device 100 further includes a positioning assembly 50 disposed on the main body 20, the positioning assembly 50 includes an end face capable of abutting against an end of the glue nozzle 30 away from the glue pipe 40, and the end face is used for positioning a location of the glue nozzle 30 on the glue pipe 40.

It should be noted that since the glue pipe 40 and the glue nozzle 30 are connected by threads, that is, after the glue nozzle 30 has been used for a period of time, when it is replaced with a new glue nozzle 30, the old glue nozzle 30 is firstly unscrewed from the glue pipe 40, and then the new glue nozzle 30 is threaded into the glue pipe 40, so that the new glue nozzle 30 can be connected with the glue pipe 40.

When the new glue nozzle 30 is mounted, since it is operated manually, if the length or angle of the new glue nozzle 30 screwed into the glue pipe 40 is inconsistent with the old glue nozzle 30, the height and angle of the new glue nozzle 30 will be different from the previous ones, so that the glue coating track is unqualified or the glue nozzle 30 collides with other structures during the movement.

Therefore, by setting the positioning assembly 50, when the glue nozzle 30 is mounted, the end of the glue nozzle 30 away from the glue pipe 40 can abut against the end face of the positioning assembly 50, thereby positioning the position of the glue nozzle 30 on the glue pipe 40.

In some embodiments, the positioning assembly 50 includes a first positioning member 51 and a second positioning member 52, the first positioning member 51 is connected between the main body 20 and the second positioning member 52, and disposed as extending along a direction from the glue pipe 40 towards the glue nozzle 30, and the end face is located on the second positioning member 52.

Specifically, the first positioning member 51 can be set as a positioning rod. An end of the positioning rod is disposed on the main body 20, and the other end of it extends along the direction from the glue pipe 40 towards the glue nozzle 30, and is connected to the second positioning member 52. Thus, the second positioning member 52 can be located at a position corresponding to the glue nozzle 30, so that the glue nozzle 30 and the end face on the second positioning member 52 abut against each other, thereby realizing the positioning of the glue nozzle 30.

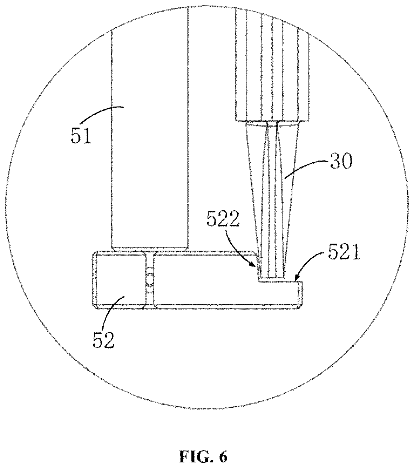

As shown in FIG. 6, in some embodiments, the end face includes a first positioning face 521 and a second positioning face 522 which are disposed in an intersecting way, and the end of the glue nozzle 30 away from the glue pipe 40 abuts against the first positioning face 521 along an extending direction of the glue pipe 40, and the end of the glue nozzle 30 away from the glue pipe 40 abuts against the second positioning face 522 along a direction perpendicular to the extending direction of the glue pipe 40.

Specifically, the first positioning face 521 and the second positioning face 522 are disposed perpendicular to each other, wherein the first positioning face 521 is disposed as extending along the horizontal direction, and the second positioning face 522 is disposed as extending along the vertical direction.

As a result, the end of the glue nozzle 30 facing away from the glue pipe 40 can abut against the first positioning face 521 along the vertical direction, thereby limiting the mounting length of the glue nozzle 30 on the glue pipe 40 through the first positioning face 521. That is, the mounting height of the glue nozzle 30 is positioned. Also, the end of the glue nozzle 30 facing away from the glue pipe 40 can abut against the second positioning face 522 along the horizontal direction, thereby limiting the mounting angle of the glue nozzle 30 on the glue pipe 40 through second positioning face 522. That is, the mounting direction of the glue nozzle 30 is positioned.

Through the aforementioned structure, the first positioning face 521 can position the mounting height of the glue nozzle 30, and the second positioning face 522 can position the mounting direction of the glue nozzle 30, so that the mounting location of the glue nozzle 30 on the glue pipe 40 can be more precise.

During the specific use of the present application, in an initial state, the glue receiving member 12 is located at the avoidance position. When the glue nozzle 30 completes the glue coating of the previous stage, the glue receiving member 12 is driven by the second driving member 132 to move from the avoidance position to the accommodating position, and then the glue receiving member 12 is driven by the first driving member 131 to move from the accommodating position to the glue receiving position. The glue receiving member 12 receives the glue from the glue nozzle 30 at the glue receiving position to prevent the glue from being dripped to the region that does not need to be coated with the glue on the member to be coated with the glue. At the same time, the glue nozzle 30 moves to a position to be coated with the glue in the next stage under the action of an external force.

When the glue nozzle 30 moves to the region that needs to be coated with the glue in the next stage, the first driving member 131 drives the glue receiving member 12 to move from the glue receiving position to the accommodating position, and then the second driving member 132 drives the glue receiving member 12 to continually move from the accommodating position to the avoidance position. At this time, the glue nozzle 30 can coat the glue onto the region to be coated with the glue successfully.

With the use of the glue coating device 100, when it needs to replace a new glue nozzle 30, first the old glue nozzle 30 is detached from the glue pipe 40, and then the new glue nozzle 30 is mounted on the glue pipe 40. During the mounting process, the end of the glue nozzle 30 facing away from the glue pipe 40 abuts against the first positioning face 521 along the vertical direction, so as to position the mounting height of the glue nozzle 30. At the same time, the end of the glue nozzle 30 facing away from the glue pipe 40 abuts against the second positioning face 522 in the horizontal direction, so as to position the mounting direction of the glue nozzle 30.

Thus, the mounting position of the glue nozzle 30 on the glue pipe 40 is more accurate, and the probability that the glue nozzle 30 collides with other structures in the glue coating device 100 due to the deviation of the mounting position or causes the glue coating trajectory to be unqualified is reduced, thereby improving the glue coating efficiency.

Finally, it should be noted that the aforementioned embodiments are merely used for illustrating rather than limiting the technical solutions of the present application. Although the present application has been described in detail with reference to the aforementioned various embodiments, it should be understood by those of ordinary skills in the art that, the technical solutions specified in the aforementioned various embodiments can still be modified, or some or all of the technical features therein can be equivalently substituted; and such modifications or substitutions do not make the essence of the corresponding technical solutions depart from the scope of the technical solutions of the various embodiments of the present application, which shall fall within the scope of the claims and the specification of the present application. In particular, the technical features mentioned in the various embodiments can be combined in any manner as long as there is no structural conflict. The present application is not limited to the particular embodiments disclosed herein, and includes all technical solutions falling within the scope of the claims.

## Claims

1. A glue receiving mechanism for use in a glue coating device, wherein the glue coating device comprises a glue nozzle for coating glue, and the glue receiving mechanism comprises:
a fixing member;
a glue receiving member spaced from the fixing member; and
a driving assembly connected between the fixing member and the glue receiving member;
wherein the glue receiving member has a glue receiving position for receiving the glue from the glue nozzle and an avoidance position for avoiding the glue nozzle and a member to be coated with the glue, and the driving assembly is used for driving the glue receiving member to reciprocate between the glue receiving position and the avoidance position.

2. The glue receiving mechanism according to claim 1, wherein the glue receiving member further has an accommodating position between the glue receiving position and the avoidance position, the driving assembly comprises a first driving member and a second driving member, the glue receiving mechanism further comprises a connecting member, and the first driving member is disposed on the connecting member and in driving connection with the glue receiving member, so as to drive the glue receiving member to reciprocate between the glue receiving position and the accommodating position; and
the second driving member is disposed on the fixing member and in driving connection with the connecting member, so as to drive the connecting member to reciprocate between the avoidance position and the accommodating position;
wherein a driving direction of the first driving member intersects a driving direction of the second driving member.

3. The glue receiving mechanism according to claim 1 or 2, wherein the glue receiving member comprises a first sub-member, a second sub-member stacked on the first sub-member and a glue receiving film, the first sub-member is connected with the driving assembly, the second sub-member is provided with a glue receiving opening thereon, and the glue receiving film is sandwiched between the first sub-member and the second sub-member, and is communicated with the glue receiving opening to form a glue receiving bin.

4. The glue receiving mechanism according to claim 3, wherein the glue receiving member further comprises a first locking member and a second locking member respectively disposed on the first sub-member and the second sub-member, and the first locking member and the second locking member cooperate with each other, so that the glue receiving film is detachably sandwiched between the first sub-member and the second sub-member.

5. The glue receiving mechanism according to claim 4, wherein the first locking member is configured as one of a hook and a buckle, and the second locking member is configured as the other one of the hook and the buckle.

6. The glue receiving mechanism according to any one of claims 2-5, wherein the fixing member includes a first fixing plate, a second fixing plate and a connecting rod, the first fixing plate and the second fixing plate are spaced along the driving direction of the second driving member, and the connecting rod is connected between the first fixing plate and the second fixing plate; and
two opposite ends of the second driving member in its driving direction are respectively disposed on the first fixing plate and the second fixing plate.

7. A glue coating device, comprising:
a main body having a glue storage cavity;
a glue nozzle for coating glue to a member to be coated with the glue;
a glue pipe disposed on the main body and communicated between the glue storage cavity and the glue nozzle; and
the glue receiving mechanism according to any one of claims 1-6, wherein the fixing member of the glue receiving mechanism is fixed on the main body.

8. The glue coating device according to claim 7, wherein the glue coating device further comprises a positioning assembly disposed on the main body, the positioning assembly comprises an end face capable of abutting against an end of the glue nozzle facing away from the glue pipe, and the end face is used for positioning a location of the glue nozzle on the glue pipe.

9. The glue coating device according to claim 8, wherein the positioning assembly comprises a first positioning member and a second positioning member, the first positioning member is connected between the main body and the second positioning member, and disposed as extending along a direction from the glue pipe towards the glue nozzle, and the end face is located on the second positioning member.

10. The glue coating device according to claim 8 or 9, wherein the end face comprises a first positioning face and a second positioning face which are disposed in an intersecting way, and the end of the glue nozzle facing away from the glue pipe abuts against the first positioning face along an extending direction of the glue pipe, and the end of the glue nozzle facing away from the glue pipe abuts against the second positioning face along a direction perpendicular to the extending direction of the glue pipe.
